# EUROPÄISCHE PATENTSCHRIFT

(11) **EP 2 203 094 B1**
(45) Veröffentlichungstag und Bekanntmachung des Hinweises auf die Patenterteilung: **15.08.2012**
(21) Anmeldenummer: 08783470.1
(22) Anmeldetag: 03.09.2008
(51) Int. Cl.: A47J 31/00

(54) **KAFFEEMASCHINE**
COFFEE MACHINE
MACHINE À CAFÉ

(30) Priorität: 16.10.2007 CH 16052007
(43) Veröffentlichungstag der Anmeldung: 07.07.2010
(73) Patentinhaber: Egro Suisse AG, 5605 Dottikon (CH)
(72) Erfinder: ANLIKER, Markus, CH-5722 Gränichen (CH)
(74) Vertreter: Robba, Pierpaolo
(86) Internationale Anmeldenummer: PCT/CH2008/000370
(87) Internationale Veröffentlichungsnummer: WO 2009/049431

(56) Entgegenhaltungen:
- EP-A- 0 761 150
- FR-A- 2 544 185

## Beschreibung

Die vorliegende Erfindung bezieht sich auf eine Kaffeemaschine gemäss dem Oberbegriff des Anspruchs 1.

Derartige voll automatisch arbeitende Kaffeemaschinen, auch Kaffeeautomaten genannt, erlauben auf Knopfdruck die Bereitstellung eines Kaffeegetränks und sind insbesondere im Gastgewerbe im Einsatz. Diese Maschinen, siehe z.B. FR-A-2 544 185, sind in der Regel grossvolumig und im Ausschankbereich fest installiert. Sie umfassen ein Gehäuse, in dem alle Komponenten des Kaffeeautomaten angeordnet sind. Diese Komponenten können grob in zwei Gruppen geteilt werden. Die erste Gruppe beinhaltet die Komponenten zur Bereitstellung des Brühwassers und - wenn vorhanden - des Dampfes und die zweite Gruppe die Komponenten zur Zubereitung des Kaffees. Die erste Gruppe umfasst die Frischwasserzuführung und eine Pumpe, welche einen oder mehrere Boiler zur Bereitstellung von Heisswasser und eventuell Dampf speist, sowie Mittel zur Förderung des erhitzten Frischwassers zu der Brühvorrichtung wie Schläuche und Ventile. Die zweite Gruppe umfasst die Pulveraufbereitung und eine oder mehrere Brühgruppen mit den Antriebs- und Steuermitteln für die Brühvorrichtung sowie eine elektronische Steuerung des Kaffeeautomaten. Diese Kaffeeautomaten erfordern einen relativ hohen Wartungsaufwand. Da alle Komponenten in einem Gehäuse angeordnet sind, ist es unvermeidbar, dass sich der beim Mahlen des Kaffees entstehende Feinstaub an Boilerwänden und Pumpengehäuse ablagert. Die mechanischen Bauelemente sind daher oft mit Kaffeepulver verunreinigt. Da sich im Inneren der Kaffeemaschine durch Aufheizen und Abkühlen teilweise auch Kondenswasser bildet, setzt sich der Mahlstaub vor allem an den feuchten Oberflächen fest. Ausserdem verursacht die kompakte Bauweise bei Störungen längere Betriebsunterbrüche, da der Ausbau einzelner Teile wie beispielsweise einer Pumpe, eines Steuerventils oder eines Boiler relativ aufwendig ist.

Es ist deshalb die Aufgabe der vorliegenden Erfindung, eine Kaffeemaschine bereit zu stellen, die im Betrieb und im Unterhalt servicefreundlich ist und die bei der Herstellung vereinfacht und beschleunigt zusammengebaut werden kann.

Diese Aufgabe wird durch eine Kaffeemaschine mit den Merkmalen des Patentanspruchs 1 gelöst.

Der Erfindung liegt die Idee zugrunde, die oben erwähnten Gruppen von Komponenten eines Kaffeeautomaten innerhalb des Gehäuses zu trennen und die Komponenten zur Bereitstellung des Brühwassers und Dampfes mit der Frischwasserzuführung, der Pumpe und den Boilern, sowie den Steuerventile in einem aus dem Gehäuse herausnehmbaren Trägerelement zusammenzufassen und darin unterzubringen. Dieses Trägerelement ist erfindungsgemäss ähnlich einer Schublade im hinteren Bereich des Gehäuses der Kaffeemaschine angeordnet und in das Gehäuse seitlich einschiebbar. Die zweite Gruppe mit den Komponenten zur Zubereitung des Kaffees und der elektronischen Steuerung befinden sich im vorderen Teil des Gehäuses. Das Gehäuse selbst kann durch eine Trennwand oder durch Streben entsprechend unterteilt sein, wobei das in das Gehäuse eingeschobene Trägerelement an der Trennwand oder an den Streben befestigt ist. Für Service- und Reparaturarbeiten muss lediglich die Befestigung des Trägerelements von der Trennwand gelöst und das Trägerelement seitlich aus dem Gehäuse gezogen werden.

Die im Trägerelement montierten Komponenten sind für die meisten Servicearbeiten bereits voll zugänglich, wenn dieses auch nur teilweise aus dem Gehäuse gezogen ist. Zu diesem Zweck müssen die Wasserleitungen und elektrischen Verbindungen von den Steuer- und Regelungsgruppen nicht abgehängt werden, sondern jede einzelne Komponente kann für sich entfernt bzw. ersetzt werden. Für den Zusammenbau des Kaffeeautomaten werden die Komponenten für die Wasser- und Dampfaufbereitung in das Trägerelement eingebaut. Unabhängig davon können die Komponenten für die Kaffeezubereitung im Gehäuse eingebaut werden. Schliesslich braucht das Trägerelement nur noch in das Gehäuse der Kaffeemaschine eingeschoben, befestigt und die elektrischen Leitungen sowie die Wasser- bzw. Dampfzuführungen mit den entsprechenden Anschlüsse im Kaffeeautomat verbunden zu werden. Diese modulartige Bauweise erleichtert und vereinfacht den Zusammenbau und Servicearbeiten an der Kaffeemaschine erheblich.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird.

Es zeigt:
- Fig. 1: eine vereinfachte Perspektiv-Darstellung eines Ausführungsbeispiels eines Gehäuses einer Kaffeemaschine mit einem in das Gehäuse eingeschobenen Trägerelement;
- Fig. 2: eine schematische Darstellung eines Gehäuses wie in Figur 1, jedoch mit teilweise aus dem Gehäuse herausgezogenem Trägerelement;
- Fig. 3: eine schematische Darstellung eines Ausführungsbeispiels eines Trägerelements in einer perspektivischen Darstellung.

In den Figuren sind für dieselben Elemente jeweils dieselben Bezugszeichen verwendet worden und erstmalige Erklärungen betreffen alle Figuren, wenn nicht ausdrücklich anders erwähnt.

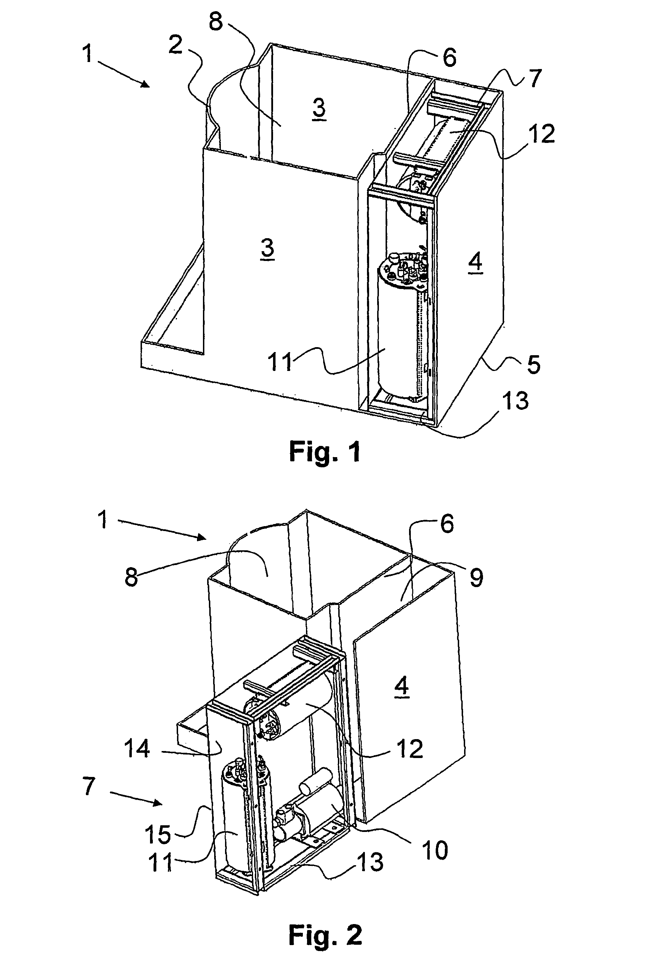

In der Figur 1 ist in einer vereinfachten Perspektiv-Darstellung das Gehäuse 1 der erfindungsgemässen Kaffeemaschine dargestellt. Das Gehäuse 1 umfasst eine Vorderfront 2, Seitenwände 3, einer Rückwand 4, einen Boden 5 und eine obere, in der Zeichnung nicht dargestellte Abdeckung. Das Gehäuse 1 ist mittels einer Abtrennung 6 in zwei Abteile 8, 9, nämlich in ein vorderes Abteil 8 und in ein hinteres Abteil 9 unterteilt. Im vorderen Abteil 8 sind die Komponenten zur Zubereitung und Ausgabe des Kaffees angeordnet. Dazu gehören die Pulveraufbereitung, eine oder mehrere Brühgruppen mit den Antriebs- und Steuermitteln für die Brühvorrichtung, eine elektronische Steuerung des Kaffeeautomaten und die Kaffeeausgabe. Diese Komponenten des Kaffeeautomaten sind in den Zeichnungen nicht dargestellt. Das hintere Abteil 9 des Gehäuses 1 bildet mit der Trennwand 6 und der Rückwand 4 eine Art Einschubfach, in welches ein schubladenartiges Trägerelement 7 seitlich in das Gehäuse 1 einschiebbar ist. In diesem Trägerelement 7 sind die Komponenten für die Heisswasseraufbereitung und die Dampfaufbereitung angeordnet. In der Zeichnung ist im Bereich des hinteren Abteils 9 die Verkleidung der Seitenwand 3 ausgeschnitten, so dass das in das hintere Abteil 9 eingeschobene Trägerelement 7 teilweise sichtbar ist. Das Trägerelement 7 ist mit der Trennwand 6 fest verbunden, beispielsweise durch eine Verschraubung. Die Unterteilung des Gehäuse 1 in zwei Abteile 8,9 kann auch mittels Streben erfolgen, an welchen das Trägerelement 7 befestigt ist. Das schubladenartige Trägerelement 7 besteht vorzugsweise aus einem etwa quaderförmigen Rahmen 13, mit wenigstens einer Seitenwand, welche die Montagewand 14 bildet und die mit der Trennwand 6 oder den Streben verschraubbar ist. In dem Trägerelement 7 sind die Komponenten für die Heisswasseraufbereitung und die Dampfaufbereitung angeordnet.

Die Figur 2 zeigt in einer schematischen Perspektiv-Darstellung das Gehäuse 1 der Kaffeemaschine wie in Figur 1, jedoch mit teilweise aus dem Gehäuse 1 herausgezogenem Trägerelement 7. Zu erkennen sind die im Trägerelement 7 angeordnete und befestigte Pumpe 10 und zwei zylinderförmige Boiler 11,12. Der vertikal ausgerichtete Boiler 11 dient der Dampferzeugung und der horizontal, im oberen Bereich des Trägerelementes 7 angeordnete Boiler 12 dient der Heisswasseraufbereitung. Die ebenfalls im Trägerelement 7 angeordneten Verbindungsschläuche, Steuerelemente sowie die elektrischen Anschlüsse und Verbindungen sind in den Figuren nicht dargestellt. Die Wasser-, Dampf- und elektrischen Verbindungen zu den Komponenten für die Kaffeezubereitung und zur Steuerung in der vorderen Abteilung 8 des Gehäuses 1 verlaufen entlang der Seitenwand 3 vorbei an der Kante 15 der Trenn- bzw. Montagewand 14. Das erlaubt ein teilweises Herausziehen des Trägerelementes 7 aus dem Gehäuse 1, ohne dass alle Schläuche und elektrischen Verbindungen von den Komponenten des vorderen Abteils 8 getrennt werden müssen, was die Reparatur- und Servicearbeiten erheblich erleichtert. Im Fall von grösseren Reparaturarbeiten können die elektrischen Leitungen und die Schläuche einfach gelöst werden, und beispielsweise ein ganzes Trägerelement 7 aus der Kaffeemaschine entfernt und durch ein neues ersetzt werden. Die Kaffeemaschine ist dadurch in kürzester Zeit wieder einsatzbereit und die Reparaturarbeiten können am ausgetauschten Trägerelement an einem anderen Ort vorgenommen werden.

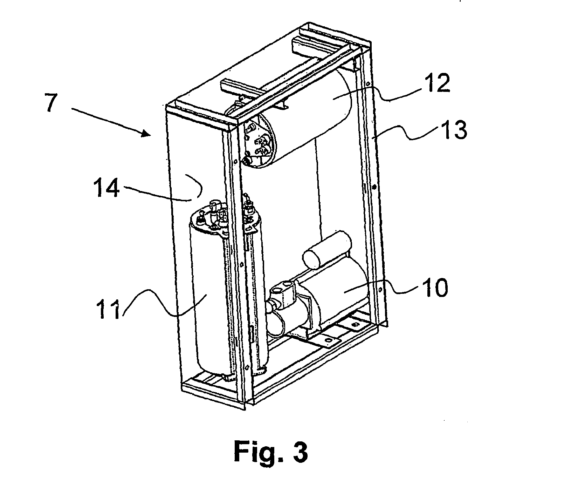

In der Figur 3 ist das Trägerelement 7 mit den darin angeordneten Komponenten für die Heisswasser- und Dampfaufbereitung in einer schematische Darstellung gezeigt. Die Pumpe 10 ist am unteren Rahmenteil des Trägerelementes 7 montiert. Im oberen Bereich des Trägerelementes 7 ist der Boiler 12 zur Heisswasseraufbereitung, und seitlich vertikal angeordnet der Boiler 11, welcher der Dampfaufbereitung dient, zu erkennen. Durch die Trennwand 6 bzw. die Monatgewand 14 erfolgt innerhalb des Gehäuses 1 einerseits eine thermische Trennung und Abschirmung zwischen den beiden Abteilen 8, 9 und andererseits weitgehend auch eine Trennung zwischen einem trocken und einem feuchten Bereich.

In einem weiteren Ausführungsbeispiel sind am Trägerelement 7 Kupplungselemente für die Verbindung der elektrischen Versorgungs- und Steuerleitungen sowie für die Wasser- und Dampfleitungen vorgesehen. Die korrespondierenden Kupplungselemente sind im Abteil 9 des Gehäuses 1 angeordnet. Beim Einschieben des Trägerelementes 7 in das Abteil 9 des Gehäuses 1 werden die entsprechenden Leitungen über deren Kupplungselemente verbunden. Durch Lösen der Kupplungen kann das Trägerelement 7 auf einfache Weise und sehr rasch aus dem Gehäuse entfernt und im Reparaturfall ersetzt werden.

Durch diesen modularen Aufbau werden sowohl die Servicearbeiten wie auch die Montagearbeiten wesentlich vereinfacht. Die Gruppe der Komponenten für die Heisswasser- und Dampfaufbereitung kann im Trägerelement 7 unabhängig von der übrigen Kaffeemaschine vormontiert oder ausgetauscht werden. Das Trägerelement 7 kann natürlich bei Bedarf auch weitere Steuerelemente enthalten.

## Patentansprüche

1. Kaffeemaschine zur automatischen Zubereitung von Kaffee oder Espresso umfassend ein Gehäuse (1) mit den darin angeordneten Komponenten zur Zubereitung und Ausgabe des Kaffees und den Komponenten (10,11 ,12) für die Heisswasseraufbereitung und die Dampfaufbereitung, **dadurch gekennzeichnet, dass** im Gehäuse (1) ein Trägerelement (7) angeordnet ist, das von einem quaderförmigen Rahmen (13) gebildet ist und zur Aufnahme der Komponenten (10, 11 ,12) für die Heisswasseraufbereitung und die Dampfaufbereitung bestimmt ist, und dass das Gehäuse (1) mittels einer Unterteilung (6) in zwei Abteile (8, 9) unterteilt ist, nämlich in ein vorderes Abteil (8) zur Aufnahme der Komponenten zur Zubereitung und Ausgabe des Kaffees, und in ein hinteres Abteil (9), das zur Aufnahme des Trägerelementes (7) bestimmt ist.

2. Kaffeemaschine nach Anspruch 1, **dadurch gekennzeichnet, dass** das Gehäuse (1) mittels einer Trennwand (6) in zwei Abteile (8, 9) unterteilt ist, derart, dass das hintere Abteil (9) ein Einschubfach bildet.

3. Kaffeemaschine nach Anspruch 1, **dadurch gekennzeichnet, dass** das Gehäuse (1) mittels Streben in zwei Abteile (8, 9) unterteilt ist.

4. Kaffeemaschine nach einem der vorherigen Ansprüche, **dadurch gekennzeichnet, dass** das Trägerelement (7) seitlich in das Gehäuse (1) einschiebbar und mit der Trennwand (6) oder den Streben verschraubbar ist.

5. Kaffeemaschine nach einem der vorherigen Ansprüche, **dadurch gekennzeichnet, dass** am Trägerelement (7) Kupplungselemente für die Verbindung der elektrischen Versorgungs- und Steuerleitungen sowie für die Wasser- und Dampfleitungen vorgesehen sind, und dass im Abteil (9) des Gehäuses (1) korrespondierende Kupplungselemente angeordnet sind.

## Claims

1. A coffee machine for the automatic preparation of coffee or espresso comprising a housing (1) with the components arranged therein for preparing and discharging the coffee and the components (10, 11, 12) for preparing hot water and steam, **characterised in that** a carrier element (7) is arranged in the housing (1), which carrier element is formed of a cuboidal frame (13) and is intended to accommodate the components (10, 11, 12) for preparing hot water and steam, and **in that** the housing (1) is subdivided by means of a subdivision (6) into two compartments (8, 9), namely into a front compartment (8) for accommodating the components for preparing and discharging the coffee, and into a rear compartment (9) which is intended to accommodate the carrier element (7).

2. A coffee machine according to claim 1, **characterised in that** the housing (1) is subdivided into two compartments (8, 9) by means of a partition (6), such that the rear compartment (9) forms an insertion slot.

3. A coffee machine according to claim 1, **characterised in that** the housing (1) is subdivided into two compartments (8, 9) by means of struts.

4. A coffee machine according any one of the preceding claims, **characterised in that** the carrier element (7) may be inserted sideways into the housing (1) and fastened with screws to the partition (6) or the struts.

5. A coffee machine according to any one of the preceding claims, **characterised in that** coupling elements are provided on the carrier element (7) for connecting the electrical supply and control lines and for the water and steam lines, and **in that** corresponding coupling elements are arranged in the compartment (9) of the housing (1).

## Revendications

1. Machine à café destinée à la préparation automatique de café ou d'expresso, ladite machine à café comportant un boîtier (1) dans lequel sont disposés les composants destinés à la préparation et à la délivrance du café et les composants (10, 11, 12) destinés à la préparation d'eau chaude et la préparation de vapeur, **caractérisée en ce que** dans le boîtier est disposé un élément de support (7) qui est formé par un cadre parallélépipédique (13) et qui est destiné à recevoir les composants (10, 11, 12) destinés à la préparation d'eau chaude et la préparation de vapeur, et **en ce que** le boîtier (1) est divisé au moyen d'un cloisonnement (6) en deux compartiments (8, 9), à savoir un compartiment avant (8) destiné à recevoir les composants destinés à la préparation et la délivrance du café, et un compartiment arrière (9) qui est destiné à recevoir l'élément de support (7).

2. Machine à café selon la revendication 1, **caractérisée en ce que** le boîtier (1) est divisé au moyen d'une paroi de séparation (6) en deux compartiments (8, 9) de sorte que le compartiment arrière (9) forme un casier enfichable.

3. Machine à café selon la revendication 1, **caractérisée en ce que** le boîtier (1) est divisé au moyen de montants en deux compartiments (8, 9).

4. Machine à café selon l'une des revendications précédentes, **caractérisée en ce que** l'élément de support (7) est insérable latéralement dans le boîtier (1) et peut être raccordés au moyen de vis à la paroi de séparation (6) ou aux montants.

5. Machine à café selon l'une des revendications précédentes, **caractérisée en ce qu'**il est prévu au niveau de l'élément de support (7) des éléments de couplage destinés à la liaison des lignes de commande et d'alimentation électrique ainsi qu'à des conduites d'eau et de vapeur, et **en ce que** des éléments de couplage correspondants sont disposés dans le compartiment (9) du boîtier (1).
